# FASCICULE DE BREVET EUROPEEN

(11) **EP 0 688 692 B1**
(45) Date de publication et mention de la délivrance du brevet: **09.09.1998**
(21) Numéro de dépôt: 95108600.8
(22) Date de dépôt: 06.06.1995
(51) Int. Cl.: B60K 15/05, E05D 1/04, E05D 11/10, E05F 1/12

(54) **Volet articulé pour la fermeture d'une trappe à carburant de véhicule automobile**
Schwenkbarer Tankverschlussdeckel für Personenkraftwagen
Hinge cover for vehicle fuel filler inlet

(30) Priorité: 21.06.1994 FR 9407696
(43) Date de publication de la demande: 27.12.1995
(73) Titulaire: PAUL JOURNEE S.A., F-60240 Reilly (FR)
(72) Inventeur: Galland, Didier, F-60590 Eragny sur Epte (FR)
(74) Mandataire: Lemaire, Marc

(56) Documents cités:
- EP-A- 0 543 190
- DE-A- 3 047 002
- DE-C- 319 739
- FR-A- 1 528 663
- US-A- 2 219 918

## Description

La présente invention concerne un volet pour la fermeture d'une trappe donnant accès à une tête de remplissage reliée à une canalisation de remplissage d'un réservoir de carburant de véhicule automobile.

Une tête de remplissage se présente généralement sous la forme d'un logement ou d'un corps creux dont la face supérieure est ouverte dans une partie de la carosserie du véhicule et dans lequel débouche l'extrémité libre de la canalisation de remplissage afin de permettre le remplissage du réservoir par introduction d'une lance de remplissage dans la canalisation.

L'orifice de la canalisation peut être obturé par un bouchon amovible, la face ouverte de la tête de remplissage constituant l'ouverture d'une trappe fermée par un volet constitué pour l'essentiel par un panneau articulé, par ses moyens d'articulation sur un élément de la structure du véhicule autour d'un axe géométrique sensiblement parallèle au plan du panneau et par des moyens de rappel élastique du panneau vers au moins une première position stable de fermeture de la trappe et vers une position stable d'ouverture pour accéder à la trappe.

Enfin, le bouchon de fermeture de la canalisation doit être un élément indépendant ou un élément porté par la face intérieure du panneau du volet de fermeture de la trappe.

On connaît de nombreuses conceptions d'un tel volet dans lesquelles les moyens d'articulation du panneau sont particulièrement encombrants et difficiles à monter en faisant notamment appel à une charnière de type classique à charnons fixes et mobiles et reliés entre eux par un axe transversal qui nécessitent de terminer les opérations de montage du panneau articulé, soit par la fixation de l'un des charnons, soit par la mise en place de l'axe transversal reliant et articulant les charnons. De plus, les moyens de rappel élastique compliquent également l'assemblage et le montage final dans la mesure où ils doivent également être reliés à la partie fixe de la structure de la caisse du véhicule automobile et au volet articulé.

Les mécanismes existants visant à simplifier les opérations de montage et d'assemblage nécessitent des profondeurs d'emboutis dans la carrosserie très importantes pour permettre de loger le mécanisme d'articulation et de rappel élastique du volet, ces emboutis devant également autoriser la rentrée partielle du panneau a l'intérieur de la carrosserie.

Selon une technique également connue, si l'on veut limiter la profondeur des emboutis réalisés dans la carrosserie, il est alors nécessaire de loger le mécanisme d'articulation et de rappel en dehors de la zone emboutie qui délimite la trappe. L'aménagement de la carrosserie dans la zone de la trappe est alors particulièrement complexe et une telle solution nécessite également de positionner l'axe d'articulation du panneau de manière que ce dernier s'escamote entièrement hors de l'aile du véhicule pour ne pas interférer avec cette dernière lors des manoeuvres d'ouverture et de fermeture.

La présente invention a pour but de proposer une nouvelle conception d'un volet de fermeture d'une trappe à carburant qui permet de remédier aux inconvénients qui viennent d'être mentionnés.

Dans ce but, l'invention propose un volet du type mentionné précédemment, caractérisé en ce que les moyens d'articulation du panneau comportent un doigt mobile d'articulation porté par le panneau qui est reçu en coulissement dans une lumière fixe d'articulation formée dans un corps fixé à un élément de la structure du véhicule et dans laquelle il est susceptible de se déplacer entre deux positions extrêmes associées aux deux positions stables du panneau, et un doigt fixe de guidage porté par le corps qui est reçu en coulissement dans une lumière mobile de guidage formée dans le panneau mobile.

Cette combinaison de doigts et de lumières fixes et mobiles permet de contrôler parfaitement la trajectoire du panneau, celui-ci étant articulé autour d'un axe géométrique parallèle au plan du panneau mais dont la position n'est pas fixe par rapport à la structure de la caisse du véhicule au cours des déplacements du panneau.

Cette conception permet également de remédier aux inconvénients mentionnés précédemment notamment en ce qu'elle limite les dimensions et la profondeur des emboutis, ou équivalents, qu'il est nécessaire de réaliser.

Selon d'autres caractéristiques de l'invention :
- la lumière d'articulation et la lumière de guidage présentent des courbures sensiblement parallèles dont la concavité est tournée vers l'axe géométrique d'articulation du panneau ;
- la lumière mobile de guidage présente un profil sensiblement en arc de cercle ;
- la lumière fixe d'articulation présente un profil sensiblement en arc de cercle dont les extrémités fermées délimitent les deux positions stables du panneau lorsque le doigt d'articulation vient en butée contre l'une ou l'autre de ces extrémités ;
- l'un des deux tronçons d'extrémité de la lumière fixe d'articulation présente un point d'inflexion de la courbure de la lumière ;
- ledit tronçon d'extrémité est associé à l'extrémité qui délimite la position stable d'ouverture du panneau ;
- le doigt mobile d'articulation est agencé au voisinage d'une extrémite de la lumière mobile de guidage et le doigt fixe de guidage est agencé au voisinage d'une extrémité de la lumière fixe d'articulation ;
- le doigt fixe de guidage est agencé au voisinage de l'extrémité de la lumière fixe d'articulation qui délimite la position stable d'ouverture du panneau ;
- le volet comporte deux doigts mobiles d'articulation coaxiaux dont chacun est reçu en coulissement dans une de deux lumières parallèles fixes d'articulation, et deux doigts fixes de guidage coaxiaux dont chacun est reçu dans une des deux lumières parallèles mobiles de guidage ;
- les lumières mobiles de guidage sont formées sur un secteur annulaire porté par le panneau ;
- les lumières fixes d'articulation sont formées dans deux joues parallèles du corps fixe entre lesquelles est reçu le secteur annulaire porté par le panneau ;
- les moyens de rappel élastique comportent un ressort porté par le corps fixe dont un brin agit sur un bec de rappel formé sur le panneau ;
- le ressort, en coopération avec le bec de rappel, est susceptible d'occuper une première position stable de rappel du panneau vers sa position d'ouverture, et une seconde position stable de rappel du panneau vers sa position de fermeture.

D'autres caractéristiques et avantages de l'invention apparaîtront à la lecture de la description détaillée qui va suivre pour la compréhension de laquelle on se reportera aux dessins annexés dans lesquels :
- La figure 1 est une vue en perspective illustrant un volet de trappe à carburant réalisé conformément aux enseignements de l'invention qui est représenté en position stable ouverte d'accès à la tête de remplissage;
- la figure 2 est une vue en section longitudinale de l'agencement illustré sur la figure 1 associé à un élément de structure de la caisse du véhicule automobile équipé d'une trappe à carburant fermée par un volet conformément aux enseignements de l'invention ;
- la figure 3 est une vue similaire à celle de la figure 2 sur laquelle le volet est illustré en position stable de fermeture ;
- la figure 4 est une vue en perspective d'un élément de doublure de la carrosserie qui délimite la tête de remplissage ;
- la figure 5 est une vue en perspective du corps du panneau articulé constituant le volet de fermeture associé à son ressort de rappel ;
- la figure 6 est une vue en perspective de l'élément complémentaire de celui illustré sur la figure 4 en association avec lequel il constitue le corps fixe des moyens d'articulation du volet ; et
- la figure 7 est une vue de l'élément de la figure 6 en perspective et selon une autre orientation.

On a représenté sur les figures un volet articulé 10 prévu pour la fermeture d'une trappe à carburant 12 d'un véhicule automobile.

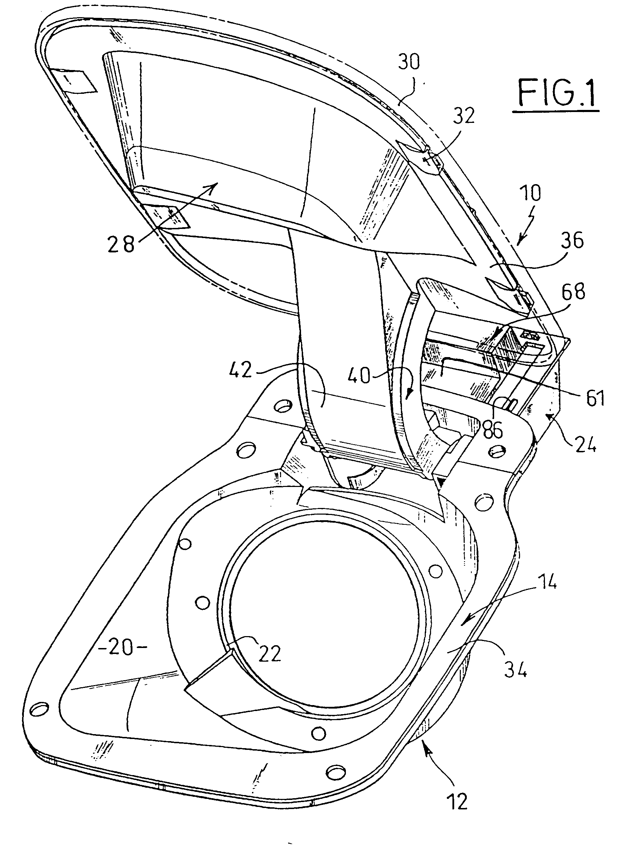

Comme on peut le voir notamment aux figures 1 à 3, la tête de remplissage 12 est constituée par un élément 14 fixé à la structure du véhicule, et plus particulièrement à un élément 16 de la carrosserie de ce dernier avec interposition de moyens d'étanchéité 18.

L'élément 14 qui constitue une doublure de la carrosserie présente une forme générale creuse qui définit un logement 20 au fond duquel est formé un orifice 22 qui est prévu pour être relié à une canalisation (non représentée) de remplissage du réservoir de carburant du véhicule automobile.

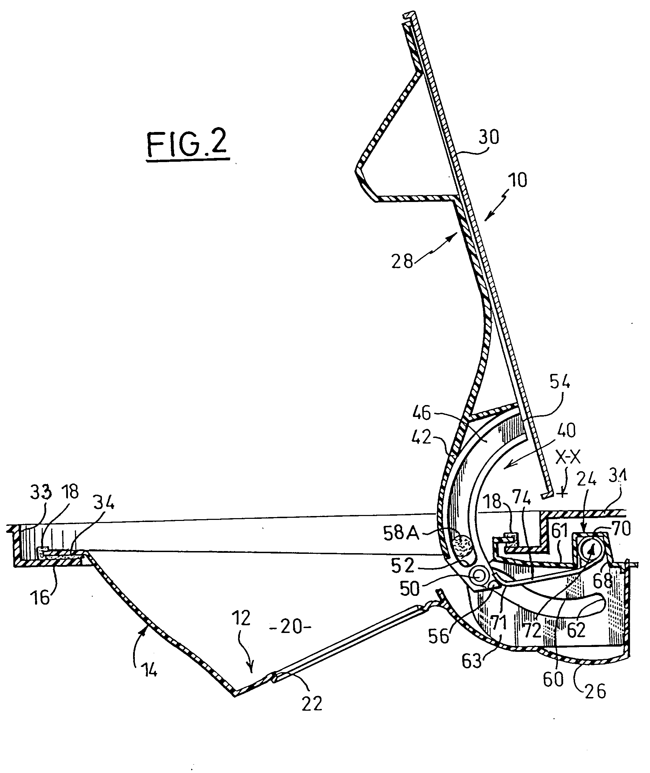

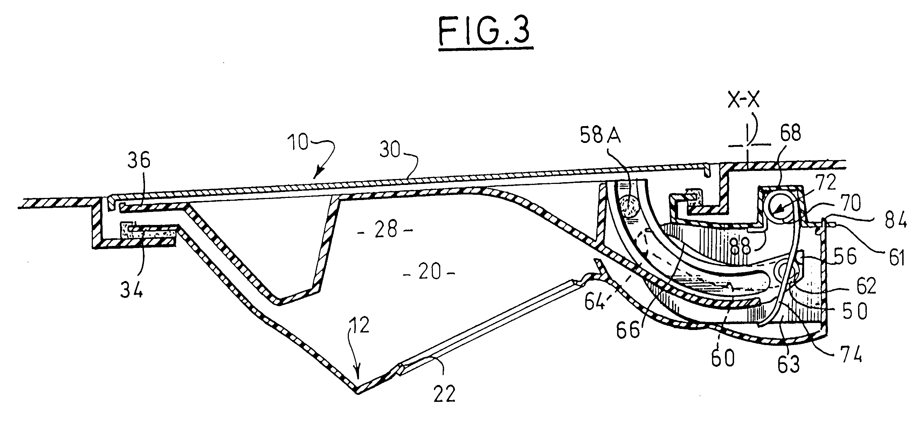

La trappe ou tête de remplissage 12, est réalisée en deux pièces, c'est-à-dire sous la forme de l'élément principal 14 et d'un élément complémentaire rapporté 24 qui sera décrit en détail par la suite et qui constitue, en association avec la partie de droite 26, en considérant les figures 2 et 3, de la pièce 14, le corps fixe des moyens d'articulation du volet 14.

Le volet 10 est constitué pour l'essentiel par un panneau articulé 28 dont la peau extérieure est constituée par un élément d'habillage sensiblement plan 30 dont la couleur et la forme sont complémentaires de la partie 31 de la carrosserie 16 dans laquelle est formée une ouverture 33 d'accès au logement 20 qui, en position de fermeture et comme cela est illustré sur la figure 3, est fermée par le panneau 10.

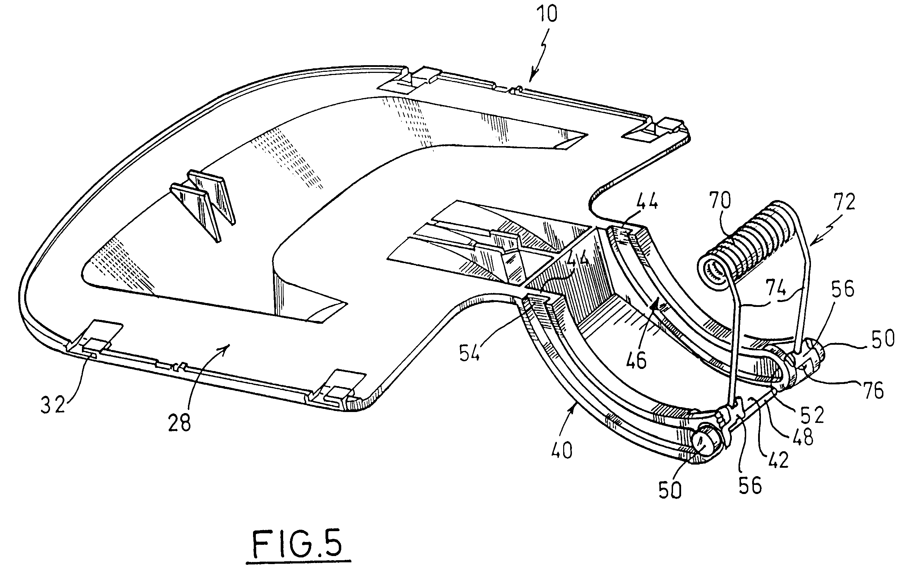

La plaque d'habillage 30 est emboîtée élastiquement sur le panneau 28 par des crochets 32 (voir figure 5).

Le bord périphérique 34 de la pièce 14 s'étend sensiblement dans un plan et le bord périphérique 36 du panneau 28 présente un contour plan complémentaire de celui du bord 34 de manière à s'étendre en vis-à-vis de ce dernier dans la position de fermeture illustrée sur la figure 3.

Afin de pouvoir pivoter entre la position d'ouverture illustrée à la figure 2 et la position de fermeture illustrée à la figure 3, le volet 10 est monté articulé autour d'un axe géométrique X-X qui, comme cela sera décrit par la suite, n'est pas fixe par rapport à la structure du véhicule mais demeure, dans les différentes positions susceptibles d'être occupées par le volet 10, sensiblement parallèle au plan général du panneau 28, c'est-à-dire parallèle au plan de l'élément d'habillage 30.

On décrira maintenant les moyens d'articulation selon l'invention du volet 10 par rapport à la trappe, c'est-à-dire les moyens d'articulation du panneau 28.

Le panneau 28, qui est illustré en détail sur la figure 5, se prolonge, en dehors de sa partie principale de gauche en considérant la figure 5, par une partie d'articulation 40 en forme générale de secteur annulaire.

La partie 40 comporte à cet effet une plaque annulaire incurvée 42 qui s'étend sensiblement en arc de cercle et qui comporte deux joues latérales parallèles 44 dans chacune desquelles est formée une rainure ou lumière mobile de guidage 46 en arc de cercle.

Au voisinage de l'extrémité libre 48 de la plaque annulaire 42, les moyens d'articulation 40 comportent deux doigts mobiles d'articulation 50 qui s'étendent latéralement dans des directions opposées.

Comme on peut le voir sur les figures 2 et 5, chaque doigt d'articulation mobile 50 est formé au voisinage d'une première extrémité fermée 52 d'une lumière mobile de guidage 46 tandis que l'extrémité opposée 54 de cette lumière est ouverte.

Chacune des joues 44 comporte, à proximité des doigts mobiles d'articulation, un ergot ou bec 56 de rappel élastique du volet 10.

Les moyens d'articulation et de guidage du volet 10 comportent également, formés dans le coffre 24 complémentaire de la pièce 14, deux doigts fixes de guidage 58A, 58B et deux lumières fixes d'articulation 60.

A cet effet, le coffre 24 comporte une paroi principale 61 sensiblement plane équipée de deux joues latérales transversales et parallèles 63 qui s'étendent dans des plans perpendiculaires à la paroi 61 et dans chacune desquelles est formée une lumière fixe d'articulation 60.

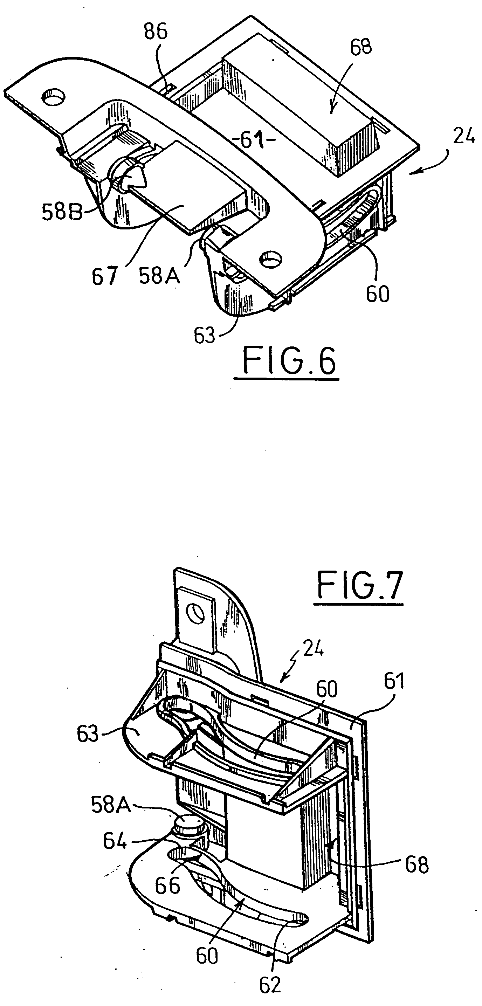

L'un des doigts fixes de guidage 58A est formé sur l'une des joues 63, comme on peut le voir à la partie inférieure de la figure 7, tandis que l'autre doigt fixe de guidage 58B est formé sur un bord d'une plaque 67 présentant une élasticité suffisante pour permettre le montage, par emboîtement élastique, des doigts 58A et 58B dans les lumières mobiles de guidage 46.

Comme on peut le voir sur les figures 2, 3 et 7, chaque lumière fixe d'articulation 60 présente un profil en arc de cercle parallèle au profil en arc de cercle des lumières mobiles de guidage 46 dont la concavité est tournée en direction de l'axe X-X.

Chaque lumière fixe d'articulation 60 se termine par une extrémité fermée 62 qui, en coopération avec le doigt mobile d'articulation 50 et comme cela est illustré sur la figure 3, délimite la position stable de fermeture du volet 10.

Chaque lumière fixe d'articulation se termine également par une autre extrémité opposée et fermée 64 qui délimite en coopération avec un doigt mobile d'articulation 50 la position stable d'ouverture du volet 10 par rapport à la trappe 12.

La portion d'extrémité de chaque lumière fixe d'articulation 60, au voisinage de son extrémité fermée 64, présente une inversion de courbure 66 dont la fonction sera décrite par la suite.

Le coffre 24 délimite également un logement ou boîtier 68 qui est prévu pour recevoir le corps 70 d'un ressort de rappel 72.

Dans le mode de réalisation illustré notamment aux figures 2, 3 et 5, le corps 70 est réalisé sous la forme d'un boudin dont chacune des extrémités se prolonge par une branche active 74.

Les deux branches actives 74 sont parallèles et chacune présente une extrémité libre incurvée 76 qui est prévue pour coopérer avec un bec de rappel associé 56 formé sur la partie d'articulation 40 du panneau 10.

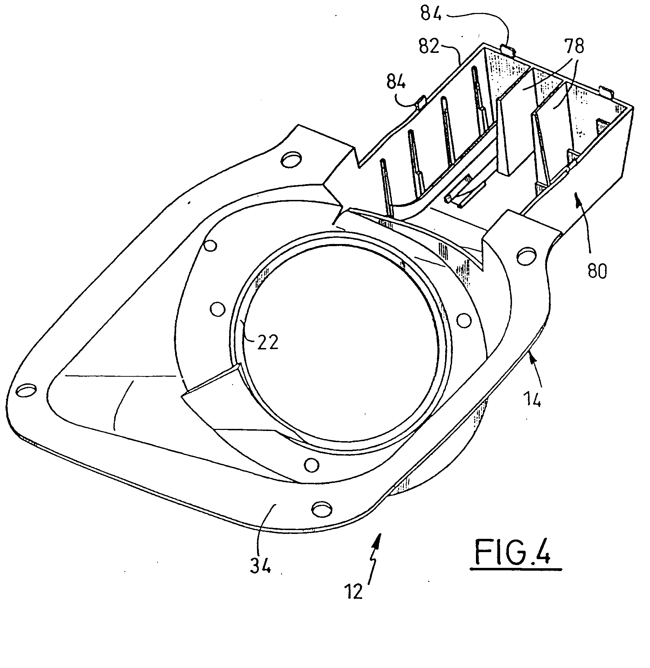

Le corps 70 du ressort de rappel 72 est maintenu dans la partie formant boîtier 68 du coffre 24 par des nervures 78 qui, comme on peut le voir sur la figure 4, sont formées à l'intérieur de la partie arrière 80 de la pièce 14 dont le bord périphérique 82 comporte des ergots 84 qui sont prévus pour être reçus dans des fentes de montage 86 formées dans la périphérie de la plaque 62 du coffre 24, ce dernier étant collé ou thermosoudé sur la partie 80 après la mise en place du ressort 72.

La mise en place du panneau 10 s'effectue de la manière suivante.

L'ensemble de la trappe constituée par les pièces assemblées 14 et 24 forme un tout dans lequel la partie d'articulation 40 du panneau 28 du volet 10 est emboîtée élastiquement.

Au cours de cette opération d'emboîtement, les doigts mobiles d'articulation 50 sont, par déformation élastique en écartement l'une de l'autre des joues 64, emboîtés élastiquement dans les lumières fixes d'articulation 60 tandis que les doigts fixes de guidage 58A et 58B sont introduits par emboîtement élastique dans les lumières mobiles de guidage 46.

Au cours de l'assemblage, les extrémités libres 76 des branches 74 du ressort de rappel 72 sont également mises en place de manière à coopérer, comme cela est illustré sur les figures 2 et 3, avec les becs de rappel 56.

L'articulation du volet 10 et son rappel élastique vers ses deux positions stables d'ouverture et de fermeture sont assurés de la manière suivante.

Dans la position illustrée sur la figure 2, l'action des branches 74 est telle que les extrémités 76 appuient sur les becs de rappel 56 et tendent à solliciter le volet 10 en rotation autour de l'axe X-X dans le sens horaire en considérant la figure 2.

La position stable d'ouverture est due à la coopération des doigts mobiles d'articulation 50 avec les extrémités 64 des lumières fixes d'articulation 60, tout pivotement du volet 10 autour de l'axe des doigts d'articulation 50 étant évité du fait de la coopération des doigts fixes de guidage 58A et 58B avec les parois parallèles de la lumière mobile de guidage 46.

Lorsque l'utilisateur désire procéder à la fermeture du panneau 10, il provoque une rotation de ce dernier dans le sens anti-horaire, en partant de la position illustrée sur la figure 2.

Au cours de cette rotation il doit vaincre un point "dur" dû à l'inversion de courbure 66 et à l'action des branches 74.

Dès que ce point dur est dépassé, les branches 74 du ressort de rappel 72 agissent sur les becs de rappel 56 et tendent à solliciter élastiquement la rotation du volet 10 dans le sens horaire jusqu'à sa position de fermeture illustrée sur la figure 3.

Au cours de cette rotation de fermeture, les doigts mobiles d'articulation 50 coulissent dans les lumières 60 jusqu'à venir en butée contre les extrémités fermées 62 de ces dernières tandis que les doigts fixes de guidage 58A et 58B coulissent dans les lumières mobiles de guidage 46.

Le volet est en permanence sollicité dans sa position de fermeture illustrée sur la figure 3 du fait de l'action continue des branches 74 du ressort 72 contre les becs 56.

A cet effet, et pour éviter que le corps 70 du ressort 72 ne tourne autour de son axe dans le boîtier 68, il est prévu des moyens 88 schématisés sous la forme de pattes sur la figure 3.

L'ouverture du volet 10 s'effectue, à partir de la position illustrée sur la figure 3, en exerçant une traction sur celui-ci tendant à le faire pivoter autour de l'axe X-X, dans le sens horaire en considérant la figure 3, à l'encontre de l'effort de rappel qui lui est appliqué par les branches 74, cet effort de rappel s'inversant dès que le point 66 d'inversion de courbure est atteint.

L'ensemble des moyens d'articulation du volet 10 est donc particulièrement compact en présentant notamment une profondeur inférieure à celle de la trappe 12 comme on peut le voir sur les figures 2 et 3 ainsi qu'une largeur transversale également inférieure à celle de l'élément principal 14 de la trappe 12 comme on peut le voir aux figures 1 et 4.

L'ensemble des composants du système d'articulation peuvent être réalisés sous la forme de pièces moulées en matière plastique conférant à certaines parties de ces éléments l'élasticité nécessaire aux opérations d'assemblage.

## Revendications

1. Volet articulé (10) pour la fermeture d'une trappe donnant accès à une tête de remplissage (12) reliée à une canalisation de remplissage d'un réservoir de carburant de véhicule automobile, du type comportant un panneau mobile (28, 30) monté articulé sur un élément (16) de la structure du véhicule autour d'un axe géométrique (X-X) sensiblement parallèle au plan du panneau (28, 30) et des moyens (72, 74) de rappel élastique du panneau (28, 30) vers une première position stable de fermeture de la trappe et une seconde position stable d'accès à la trappe, caractérisé en ce que les moyens d'articulation du panneau comportent un doigt mobile d'articulation (50) porté par le panneau (28, 30) qui est reçu en coulissement dans une lumière fixe d'articulation (60), formée dans un corps (24) fixé à un élément de structure (16) du véhicule et dans laquelle il est susceptible de se déplacer entre deux positions extrêmes associées aux deux positions stables du panneau (28, 30) et un doigt fixe de guidage (58A) porté par le corps (24) qui est reçu en coulissement dans une lumière mobile de guidage (46) formée dans le panneau mobile (28, 30).

2. Volet articulé selon la revendication 1, caractérisé en ce que la lumière fixe d'articulation (60) et la lumière mobile de guidage (46) présentent des courbures sensiblement parallèles dont la concavité est tournée vers l'axe géométrique d'articulation (X-X) du panneau (28, 30).

3. Volet articulé selon l'une quelconque des revendications précédentes, caractérisé en ce que la lumière mobile de guidage (46) présente un profil sensiblement en arc de cercle.

4. Volet articulé selon l'une des revendications 2 ou 3, caractérisé en ce que la lumière fixe d'articulation (60) présente un profil sensiblement en arc de cercle dont les extrémités fermées (62, 64) délimitent les deux positions stables du panneau (28, 30) lorsque le doigt d'articulation (50) vient en butée contre l'une ou l'autre de ces extrémités (62, 64).

5. Volet articulé selon la revendication 4, caractérisé en ce que l'un des deux tronçons d'extrémité de la lumière fixe d'articulation (60) présente un point (66) d'inflexion de la courbure de la lumière.

6. Volet articulé selon la revendication 5, caractérisé en ce que ledit tronçon d'extrémité est associé à l'extrémité (64) qui délimite la position stable d'ouverture du panneau (28, 30).

7. Volet articulé selon l'une quelconque des revendications précédentes, caractérisé en ce que le doigt mobile d'articulation (50) est agencé au voisinage d'une extrémite (52) de la lumière mobile de guidage (46), et en ce que le doigt fixe de guidage (58A) est agencé au voisinage d'une extrémité (64) de la lumière fixe d'articulation (60) qui délimite la position stable d'ouverture du panneau.

8. Volet articulé selon l'une quelconque des revendications précédentes, caractérisé en ce qu'il comporte deux doigts mobiles d'articulation coaxiaux (50) dont chacun est reçu en coulissement dans une de deux lumières parallèles fixes d'articulation (60), et deux doigts fixes de guidage coaxiaux (58A, 58B) dont chacun est reçu dans une de deux lumières parallèles mobiles de guidage (46).

9. Volet articulé selon la revendication 8, caractérisé en ce que les lumières mobiles de guidage (46) sont formées sur un secteur annulaire (40, 42) porté par le panneau (28, 30).

10. Volet articulé selon l'une des revendications 8 ou 9, caractérisé en ce que les lumières fixes d'articulation (60) sont formées dans deux joues parallèles (63) du corps fixe (24) entre lesquelles est reçu le secteur annulaire (40, 42) porté par le panneau (28, 30).

11. Volet articulé selon l'une quelconque des revendications précédentes, caractérisé en ce que les moyens de rappel élastique comportent un ressort (72) porté par le corps fixe (24) dont un brin (74) agit sur un bec de rappel (56) formé sur le panneau (28, 40).

12. Volet articulé selon la revendication 11, caractérisé en ce que le ressort (72), en coopération avec le bec de rappel (56), est susceptible d'occuper une première position stable de rappel du panneau (28) vers sa position d'ouverture, et une seconde position stable de rappel du panneau (28) vers sa position de fermeture.

## Claims

1. An articulated cover (10) for closing a trap giving access to a filling head (12) connected to a filling pipe of a motor vehicle fuel tank, of the type comprising a movable panel (28, 30) which is articulated on an element (16) of the structure of the vehicle about a geometric axis (X-X) substantially parallel to the plane of the panel (28, 30), together with elastic means (72, 74) for biassing the panel (28, 30) to a stable position in which the trap is closed and a stable second position giving access to the trap, characterised in that the means for articulating the panel comprise a movable articulation finger (50) which is carried by the panel (28, 30) and which is received in sliding relationship in a fixed articulation aperture (60) formed in a body (24) which is fixed to a structural element (16) of the vehicle, and in which it is able to be displaced between two extreme positions associated with the two stable positions of the panel (28, 30), and a fixed guide finger (58A) carried by the body (24) and received in sliding relationship in a movable guide aperture (46) formed in the movable panel (28, 30).

2. An articulated cover according to Claim 1, characterised in that the fixed articulation aperture (60) and the movable guide aperture (46) have substantially parallel curvatures, the concavity of which faces towards the geometric axis (X-X) of articulation of the panel (28, 30).

3. An articulated cover according to either one of the preceding Claims, characterised in that the movable guide aperture (46) has a profile which is substantially an arc of a circle.

4. An articulated cover according to Claim 2 or Claim 3, characterised in that the fixed articulation aperture (60) has a profile substantially in the form of an arc of a circle, the closed ends (62, 64) of which delimit the two stable positions of the panel (28, 30) when the articulation finger (50) comes into abutment against one or other of the said ends (62, 64).

5. An articulated cover according to Claim 4, characterised in that one of the two end portions of the fixed articulation aperture (60) has a point of inflection (66) in the curvature of the aperture.

6. An articulated cover according to Claim 5, characterised in that the said end portion is associated with the end (64) that defines the stable open position of the panel (28, 30).

7. An articulated cover according to any one of the preceding Claims, characterised in that the movable articulation finger (50) is arranged close to one end (52) of the movable guide aperture (46), and in that the fixed guide finger (58A) is arranged close to one end (64) of the fixed articulation aperture (60) which defines the stable open position of the panel.

8. An articulated cover according to any one of the preceding Claims, characterised in that it has two coaxial movable articulation fingers (50), each of which is received in sliding relationship in one of two fixed parallel articulation apertures (60), together with two coaxial fixed guide fingers (58A, 58B), each of which is received in one of two parallel movable guide apertures (46).

9. An articulated cover according to Claim 8, characterised in that the movable guide apertures (46) are formed on an annular sector (40, 42) carried by the panel (28, 30).

10. An articulated cover according to Claim 8 or Claim 9, characterised in that the fixed articulation apertures (60) are formed in two parallel portions (63) of the fixed body (24), between which the annular sector (40, 42) carried by the panel (28, 30) is received.

11. An articulated cover according to any one of the preceding Claims, characterised in that the resilient biassing means comprise a spring (72) carried by the fixed body (24) and of which an arm (74) acts on a return seat (56) formed on the panel (28, 40).

12. An articulated cover according to Claim 11, characterised in that the spring (72), in cooperation with the return seat (56), is adapted to occupy a stable first position in which the panel (28) is urged into its open position, and a second stable position in which the panel (28) is urged into its closed position.

## Patentansprüche

1. Schwenkbare Klappe (10) für den Verschluß eines Schachts, der zu einem Füllkopf (12) führt, der mit einem Einfüllrohr des Kraftstofftanks eines Kraftfahrzeugs verbunden ist, umfassend eine bewegliche Platte (28, 30), die an einem Element (16) der Struktur des Fahrzeugs schwenkbar um eine geometrische Achse (X-X) gelagert ist, die parallel zur Ebene der Platte (28, 30) verläuft, und Mittel (72, 74) für die elastische Rückstellung der Platte (28, 30) zu einer ersten stabilen Position mit Verschluß des Schachts und einer zweiten stabilen Position mit Zugang zum Schacht, **dadurch gekennzeichnet,** daß die Mittel zur Anlenkung der Platte einen an der Platte (28, 30) angebrachten beweglichen Gelenkfinger (50) umfassen, der verschiebbar in ein ortsfestes Gelenkschlitzloch (60) eingesetzt ist, das in einen an einem Strukturelement (16) des Fahrzeugs befestigten Körper (24) eingearbeitet ist und in dem er sich zwischen zwei Endpositionen verschieben kann, die den beiden stabilen Positionen der Platte (28, 30) zugeordnet sind, und einen am Körper (24) angebrachten ortsfesten Führungsfinger (58A), der verschiebbar in ein bewegliches Führungsschlitzloch (46) eingesetzt ist, das in die bewegliche Platte (28, 30) eingearbeitet ist.

2. Schwenkbare Klappe nach Anspruch 1 , **dadurch gekennzeichnet,** daß das ortsfeste Gelenkschlitzloch (60) und das bewegliche Führungsschlitzloch (46) in etwa parallele Krümmungen aufweisen, deren Austiefung zur geometrischen Gelenkachse (X-X) der Platte (28, 30) gerichtet ist.

3. Schwenkbare Klappe nach einem der vorangehenden Ansprüche , **dadurch gekennzeichnet,** daß das bewegliche Führungsschlitzloch (46) ein in etwa kreisbogenförmiges Profil aufweist.

4. Schwenkbare Klappe nach einem der Ansprüche 2 oder 3, **dadurch gekennzeichnet,** daß das ortsfeste Gelenkschlitzloch (60) ein in etwa kreisbogenförmiges Profil aufweist, dessen geschlossene Enden (62, 64) die beiden stabilen Positionen der Platte (28, 30) begrenzen, wenn der Gelenkfinger (50) an einem oder dem anderen dieser Enden (62, 64) zum Anschlag kommt.

5. Schwenkbare Klappe nach Anspruch 4 , **dadurch gekennzeichnet,** daß einer der beiden Endabschnitte des ortsfesten Gelenkschlitzlochs (60) einen Wendepunkt (66) der Krümmung des Schlitzlochs aufweist.

6. Schwenkbare Klappe nach Anspruch 5 , **dadurch gekennzeichnet,** daß der besagte Endabschnitt dem Ende (64) zugeordnet ist, das die stabile Öffnungsposition der Platte (28, 30) begrenzt.

7. Schwenkbare Klappe nach einem der vorangehenden Ansprüche , **dadurch gekennzeichnet,** daß der bewegliche Gelenkfinger (50) in der Nähe eines Endes (52) des beweglichen Führungsschlitzlochs (46) angeordnet ist und daß der ortsfeste Führungsfinger (58A) in der Nähe eines Endes (64) des ortsfesten Gelenkschlitzlochs (60) angeordnet ist, das die stabile Öffnungsposition der Platte begrenzt.

8. Schwenkbare Klappe nach einem der vorangehenden Ansprüche , **dadurch gekennzeichnet,** daß sie zwei bewegliche koaxiale Gelenkfinger (50), die jeweils verschiebbar in eines der beiden ortsfesten parallelen Gelenkschlitzlöcher (60) eingesetzt sind, und zwei ortsfeste koaxiale Führungsfinger (58A, 58B) umfaßt, die jeweils in eines der beiden beweglichen parallelen Führungsschlitzlöcher (46) eingesetzt sind.

9. Schwenkbare Klappe nach Anspruch 8 , **dadurch gekennzeichnet,** daß die beweglichen Führungsschlitzlöcher (46) auf einem an der Platte (28, 30) angeordneten Ringsegment (40, 42) ausgebildet sind.

10. Schwenkbare Klappe nach einem der Ansprüche 8 oder 9 , **dadurch gekennzeichnet,** daß die ortsfesten Gelenkschlitzlöcher (60) in zwei parallelen Seitenwangen (63) des ortsfesten Körpers (24) ausgebildet sind, zwischen denen das an der Platte (28, 30) angeordnete Ringsegment (40, 42) eingesetzt ist.

11. Schwenkbare Klappe nach einem der vorangehenden Ansprüche , **dadurch gekennzeichnet,** daß die elastischen Rückstellmittel eine am ortsfesten Körper (24) angebrachte Feder (72) umfassen, von der ein Ende (74) auf eine an der Platte (28, 30) ausgebildete Rückstellnase (56) einwirkt.

12. Schwenkbare Klappe nach Anspruch 11, **dadurch gekennzeichnet,** daß die Feder (72) im Zusammenwirken mit der Rückstellnase (56) eine erste stabile Position mit Rückstellung der Platte (28) zu ihrer Öffnungsposition und eine zweite stabile Position mit Rückstellung der Platte (28) zu ihrer Schließposition einnehmen kann.
